# EUROPEAN PATENT APPLICATION

(11) **EP 3 336 932 A1**
(43) Date of publication of application: **20.06.2018**
(21) Application number: 16203916.8
(22) Date of filing: 14.12.2016
(51) Int. Cl.: H01M 2/34

(54) **BATTERY WITH ENHANCED DISCHARGING DEVICE**

(71) Applicant: Lithium Energy and Power GmbH & Co. KG, 70469 Stuttgart (DE)
(72) Inventor: Liebenow, Cornelius, 70372 Stuttgart (DE)
(74) Representative: Bee, Joachim

(57) **Abstract**

The invention regards a battery (1) comprising a body (2) including at least one battery cell (19), a discharging device (3) for selectively establishing a shortcut of the at least one battery cell (19), an activation device (12, 14, 16, 17) which is movable between a first position and a second position, wherein in the first position, the activation device (12, 14, 16, 17) does not influence the discharging device (3), wherein in the second position, the activation device (12, 14, 16, 17) activates the discharging device (3), wherein the discharging device (12, 14, 16, 17) is adapted to be moved from the first positon to the second position by temperature and/or pressure increase within the body (2).

## Description

### Prior Art

The invention regards a battery. The battery comprises a discharging device, which allows to externally shortcut the battery in order to discharge at least one battery cell of the battery in case of damage. In this way, catastrophic behavior of the battery like explosion or fire can be avoided.

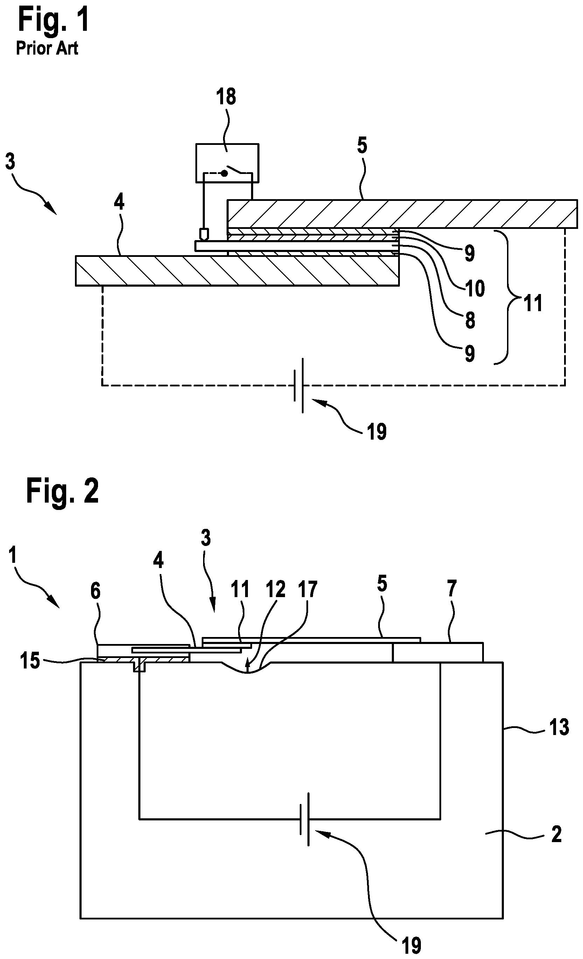

From the prior art, discharging devices for battery are known. Particularly, figure 1 shows a discharging device according to the prior art. Such discharging device 3 follows the so called antifuse technology described in DE 10 2012 005 979 B4.

The discharging device 3 comprises a first contact element 4 and a second contact element 5, which are electrically connectable to at least one battery cell 19. Between the first contact element 4 and the second contact element 5, a foil package 11 is provided.

The foil package 11 comprises an energy storing foil 8, an isolating foil 10 and two solder layers 9. The solder layers 9 are provided in direct contact to the first contact element 4 and the second contact element 5, respectively. The isolating foil 10 and the energy storing foil 8 are provided in contact to each other, while both, the isolating foil 10 and the energy storing foil 8 contact one of the solder layers 9. As can be seen from figure 1, the isolating layer 10 is provided between the energy storing foil 8 and the second contact element 5, but might alternatively be provided between the first contact element 4 and the energy storing foil 8.

Due to the isolating foil 10, the first contact element 4 and the second contact element 5 are electrically isolated from each other. However, the discharging device 3 also allows establishing a low resistance connection between the fist contact element 4 and the second contact element 5. For such a connection, the discharging device has to be activated by an activating logic 18.

The activating logic 3 comprises a sensor for detecting an activation event like an increasing battery temperature or internal pressure of the battery, or a communicating unit for receiving an activation signal. The activating logic 18 further comprises a switch for connecting the energy storing foil 8 and the first contact element 4 or the second contact element 5, thereby bypassing the isolating foil 10. In figure 1, the switch will connect the second contact element 5 and the energy storing foil 8. This leads to a current flowing through the energy storing foil 8, which heats up in response to the current.

The isolating foil 10 is provided such that it is destroyed by the heat of the energy storing foil 8. Therefore, the first contact element 4 and the second contact element 5 are no longer electrically isolated. This means that the discharging device 3 provides an external shortcut when connected to battery terminals such that battery cells 19 can be discharged.

The isolating foil 10 preferably is destroyed by melting or burning due to the heat generated by the energy storing foil 8. The energy storing foil 8 also allows liquefying the solder layers 9, such that the first contact element 4 and the second contact element 5 are connected with low resistance due to a soldering process. Hence, the discharging device 3 establishes a low resistance current path for high currents.

However, the activating logic 18 causes current leakage which leads to creeping discharge of the battery provided with the discharging device 3 and the activating logic 18. Further, the activating logic increases the weight and the volume of the battery.

### Disclosure of the invention

The inventive battery allows discharging by an external shortcut without providing an activating logic. Therefore, the battery is low in weight and small in volume. Nevertheless, the battery is still provided with a discharging device to increase safety of the battery during use.

The battery comprises a body including at least one battery cell. The battery further comprises a discharging device and an activation device. The discharging device is adapted to selectively establish a short cut of the at least one battery cell. The short cut preferably is a low resistance current path. In order to establish such a short cut, the discharging device has to be activated, which is performed via the activation device. The activation device is movable between a first position and a second position, wherein in the first position, the activation device does not influence the discharging device and in the second position, the activation device activates the discharging device. Upon activation, said shortcut is established to discharge the at least one battery cell. The discharging device might be adapted to discharge at least one battery cell. Further, the activation device is adapted to be moved from the first positon to the second position by temperature and/or pressure increase within the body. Therefore, no further logic is required to activate the discharging device. On the contrary, the physical effect itself, i.e. an increase of temperature and/or pressure within the body leads to activation of the discharging device. Particularly, the second position is only reached in case the temperature and/or the pressure exceed respective predetermined critical values. Due to lack of any logic unit, the activation device is more reliable compared with the prior art since any logic unit may malfunction.

The dependent claims describe advantageous embodiments of the invention.

In a preferred embodiment, the discharging device comprises a first contact element and a second contact element. The first contact element is electrically connected to a first battery terminal, while the second contact element is electrically connected to a second battery terminal. The discharging device preferably further comprises an isolating foil provided between the first contact element and the second contact element for electrical isolation. In this way, the discharging device disconnects the first contact element and the second element. The discharging device comprises an energy storing foil provided between the first contact element or the second contact element and the isolating foil. The energy storing foil is preferably adapted to neutralize the isolating function of the isolating foil. The activation device is adapted to electrically connect the first contact element and the second contact element when moved to the second positon. Particularly, activating the discharging device is performed by such an electrical connection between the energy storing foil and the first contact element or the second contact element. After activation, the first contact element and the second contact element are electrically connected to establish a low resistance current path.

Preferably, the energy storing foil is adapted to heat up after the discharging device is activated. In this way, the isolating foil is destroyed. Particularly, the isolating foil melts or burns due to the heat generated by the energy storing foil. Particularly, the isolating foil is destroyed such that it at least contains a hole. Without the isolating foil, the first contact element and the second contact element are electrically connected. It is further preferred to provide at least one solder layer which is liquefied due to the heat generated by the energy storing foil. The solder layer therefore allows a low resistance connection between the first contact element and the second contact element due to a soldering process. In a further preferred embodiment, the isolating foil comprises at least one hole, through which the liquefied solder layer connects the first contact element and the second contact element. In this case, the generated heat only liquefies the solder layers without destroying the isolating foil in order to connect the solder layers of the first contact element and the second contact element. The isolating foil hence particularly can be an air gap.

The activation device particularly comprises a temperature-sensitive switch, which preferably is made from a bimetal. The temperature-sensitive switch can be moved between a closed position and an open position, wherein the open position corresponds to the first position and the closed position corresponds to the second position. The temperature-sensitive switch electrically connects the first contact element or the second contact element and the energy storing foil in the second positon. In the first position, the temperature-sensitive switch disconnects the first contact element or the second contact element and the energy storing foil. The temperature-sensitive switch is moved to the second position with the temperature inside the body exceeding a predetermined temperature value. Therefore, the discharging device is activated in case the temperature becomes too high.

In a further preferred embodiment, the activation device comprises a contact pin electrically connected to either the first contact element or the second contact element. The contact pin is moveable between the first positon and the second position by an elastic portion of the body. When moved to the second position, the contact pin electrically connects the first contact element or the second contact element and the energy storing foil. On the other side, the contact pin disconnects the first contact element or the second contact element and the energy storing foil in the first positon. The elastic portion preferably moves the contact pin in response the pressure increase inside the battery. Hence, the pressure within the battery can be monitored in order to avoid catastrophic behavior of the battery, since increased pressure is an indication for damages within the battery.

Particularly, the contact pin is electrically connected to and held by the elastic portion. The elastic portion is further electrically connected to either the first contact element or the second contact element. The elastic portion preferably is made from an electroconductive membrane. Further, the contact pin is moved to the second position by deformation of the elastic portion. Said deformation preferably is a response to pressure increase inside the battery.

In an alternative embodiment, the activation device comprises a contact pin electrically connected to and held by the energy storing foil and an elastic portion of the body. The elastic portion is deformable between the first position and the second position. Further, the elastic portion electrically connects the first contact element or the second contact element and the contact pin in the second positon and disconnects the first contact element or the second contact element and the contact pin in the first positon. Preferably, the elastic portion is made of an electroconductive material or comprises an electroconductive coating or insert. The contact pin has not to be moved in this embodiment such that the number of moving parts is reduced.

Preferably, the activation device comprises a further pin electrically connected to and held by the first contact element or the second contact element. In this case, the elastic portion does not have to be connected to the first contact element or the second contact element such that the elastic portion can be manufactured in a simple way. The elastic portion electrically connects the further pin and the contact pin in the second positon and disconnects the further pin and the energy storing foil in the first positon. Again, the elastic portion preferably is made of an electroconductive material or comprises an electroconductive coating or insert.

The elastic portion particularly is deformable by pressure increase inside the body. The contact pin is moved to and/or the elastic portion is deformed to the second position with the pressure inside the body exceeding a predetermined pressure value. Therefore, the discharging device is activated in case the pressure becomes too high.

Preferably, the body comprises an electrolyte having a boiling point of at most the predetermined pressure value. Therefore, the activation device might activate the discharging device only in case the pressure exceeds the predetermined critical pressure value. In case the temperature inside the body rises, the electrolyte starts boiling thereby increasing the pressure inside the body. Thus, the discharging device also is activated in case of temperature increase, since said temperature increase leads to pressure increase. The activation device therefore reliably activates the discharging device to avoid catastrophic battery behavior like explosion or fire.

### Description of the drawings

In the following, embodiments of the invention will be described together with the attached drawings. In the drawings,
- Figure 1: is a schematic view of a discharging device for a battery according to the prior art,
- Figure 2: is a schematic view of a battery according to a first embodiment of the invention,
- Figure 3: is a schematic detail view of the battery according to the first embodiment of the invention,
- Figure 4: is a schematic view of a battery according to a second embodiment of the invention,
- Figure 5: is a schematic detail view of a battery according to a third embodiment of the invention, and
- Figure 6: is a schematic detail view of a battery according to a fourth embodiment of the invention.

### Embodiments of the invention

Figure 2 is a schematic view of a battery 1 according to a first embodiment of the invention. The battery 1 comprises at least one battery cell 19 within a body 2, wherein the battery cell 19 is connected to a first battery terminal 6 and a second battery terminal 7. Via the first battery terminal 6 and the second battery terminal 7, electrical power can be supplied to external devices.

The battery 1 further comprises a discharging device 3, which allows shortcutting the first battery terminal 6 and the second battery terminal 7. Hence, the discharging device 3 comprises a first contact element 4 being electrically connected to the first battery terminal 6 and a second contact element 5 being electrically connected to the second battery terminal 7. The discharging device 3 particularly establishes a low resistance current path such that high currents may flow through the discharging device 3. Said current path is only established after activating the discharging device 3. Hence, without activating, the discharging device 3 electrically isolates the first battery terminal 6 and the second battery terminal 7 from each other. Particularly, the discharging device comprises the same foil package 11 shown in figure 1. This means, an energy storing foil 8 is electrically connected to the first contact element 4 via a solder layer 9. Further, the energy storing foil 8 is electrically isolated from the second contact element 5 via isolating foil 10, which itself is connected to the second contact element 5 via a solder layer 9. For activating the discharging device 3, the isolating foil 10 is bypassed such that the energy storing foil 8 heats up due to current flowing between the first contact element 4 and the second contact element 5 via the energy storing foil 8. This destroys the isolating foil 10, particularly by burning or melting, and/or liquefies the solder layers 9, which leads to a low resistance connection between the first contact element 4 and the second contact element 5 due to a soldering process.

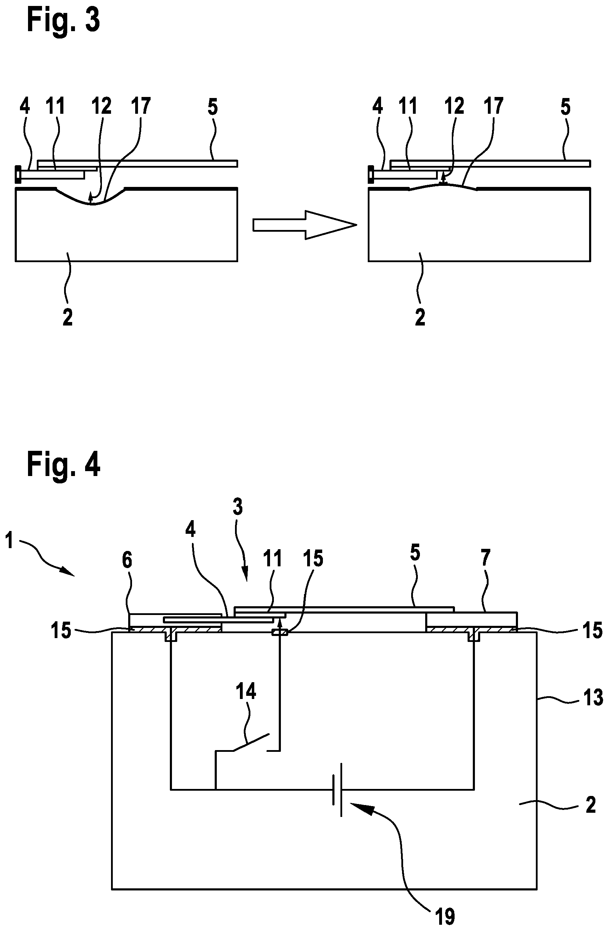

Additionally, the battery 1 comprises an activation device for activating the discharging device. The activation device comprises a contact pin 12 and an elastic portion 17 of the body 2. The contact pin 12 mounted on the elastic portion 17 and is therefore movable with the elastic portion 17 deforming. The elastic portion 17 is deformable with increasing internal pressure inside the body 2. Increasing internal pressure usually is the result of a damage and/or overheating of the at least one battery cell 19. In order to avoid explosion or fire, the damaged battery cell 19 has to be discharged in a safe and reliable way. Hence, the discharging device 3 has to be activated. This is performed by deforming the elastic portion 17 such that the contact pin 12 is moved into a second position. This particularly can be seen in figure 3.

Figure 3 shows on the left side a detail view of the battery 1 of figure 2 with the contact pin 12 in a first position. The elastic portion 17 is not deformed. In case the internal pressure within the body 2 increases, the elastic portion 17 deforms in order to move the contact pin 12 to the second positon, which is shown on the right side of figure 3. Particularly, the elastic portion 17 is adapted such that the contact pin 12 only reaches the second position in case the internal pressure inside the body 2 exceeds a predefined critical value.

In order to activate the discharging device 3, the contact pin 12 is electrically connected to the second battery terminal 7. In the second position, the contact pin 12 further contacts the energy storing foil 8, while in the first position, the contact pin 12 does not contact the energy storing foil 8. Therefore, the contact pin 12 provides an electrical connection between the second contact element 5 and the energy storing foil 8, thereby bypassing the isolating foil 10. This leads to electrically current flowing between the first contact element 4 and the second contact element 5 via the energy storing foil 8. As described above, the energy storing foil 8 heats up and causes an electrical connection between the first contact element 4 and the second contact element 5.

Preferably, the body 2 according to the first embodiment comprises a conductive housing 13, which is electrically connected to the second battery terminal 7 and isolated from the first battery terminal 6 via isolating element 15. The elastic portion 17 is preferably part of the conductive housing 13. Therefore, the contact pin 2 is electrically connected to the elastic portion 17 in order to be connected to the second battery terminal 7. The elastic portion 17 preferable comprises an electroconductive membrane.

It can be seen that the discharging device 3 is activated without including an activating logic 18, which has to be provided in discharging devices according to the prior art. This leads to reduced manufacturing costs and time of the battery 1. Further, volume and weight of the battery 1 are reduced due to lack of the activating logic 18.

Figure 4 is a schematic view of a battery 1 according to a second embodiment of the invention. The battery 1 according to the second embodiment is basically identical to the first embodiment. The only difference regards the activation device and the housing 13. In the second embodiment, the housing 13 is not connected to the first battery terminal 6 or the second battery terminal 7. The first battery terminal 6 and the second battery terminal 7 are rather isolated from the housing 13 via respective isolating element 15.

The activation device comprises a temperature-sensitive switch 14, preferably a bimetal. The temperature-sensitive switch 14 is electrically connected to the energy storing foil 8 and to the second battery terminal 7. This is due to the case that the energy storing foil 8 is electrically isolated from the second battery terminal 7 via the isolating foil 10. In case the energy storing foil 8 would be isolated from the first battery terminal 6, the temperature-sensitive switch 14 would be electrically connected to the first battery terminal 6. In this way, closing the temperature-sensitive switch 14 allows a current to flow through the energy storing foil 8 which activates the discharging device 3.

The temperature-sensitive switch 14 is movable between a first position and a second position wherein the first position corresponds to an open position of the temperature-sensitive switch in which the second battery terminal 7 and the energy storing foil 8 are disconnected, wherein the second position corresponds to a closed positon of the temperature-sensitive switch 14, in which the second battery terminal 7 and the energy storing foil 8 are electrically connected.

A state in which the temperature-sensitive switch 14 is moved to the second position therefore corresponds to the above mentioned case in which the contact pin 14 is moved to the second positon. Therefore, the same effects regarding activation of the discharging device 3 apply. The temperature-sensitive switch 14 particularly is moved to second positon in case a temperature inside the body 2 exceeds a predetermined critical value.

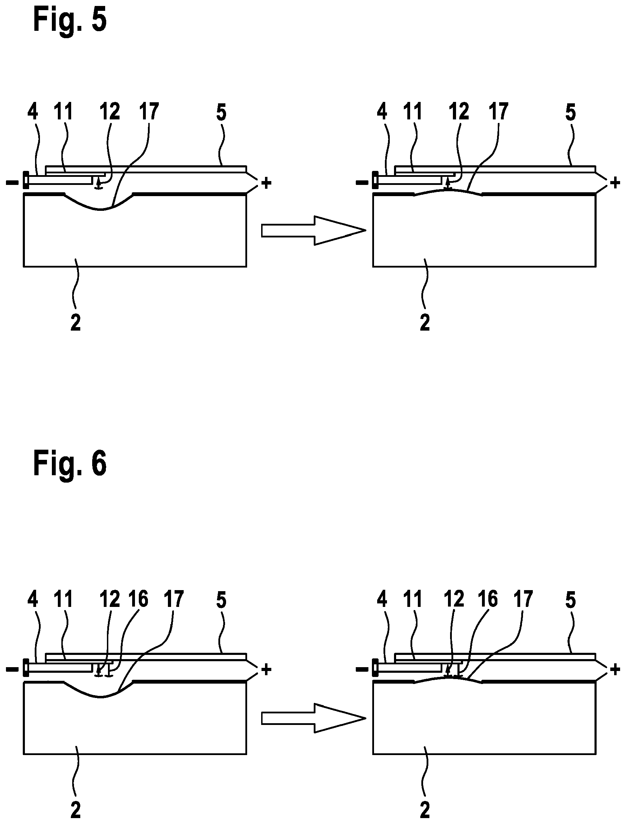

Figure 5 is a detail view of a battery 1 according to a third embodiment of the invention. The third embodiment differs from the first embodiment only in that the contact pin 12 is not held by the elastic element 17 but by the energy storing foil 8. Therefore, the elastic element 17 has to be deformed in order to move the elastic element 17 from a first position to a second position. In the second position, the elastic element 17 contacts the contact pin 12 and therefore electrically contacts the energy storing foil 8 and the second battery terminal 7. This leads to activation of the discharging device 3 as described above. In figure 5, the left side shows the elastic element 17 in the first position, while the right side shows the elastic element 17 in the second position. The elastic element 17 is only moved to the second positon in case the pressure inside the body exceeds a predefined critical pressure.

Figure 6 is a detail view of a battery 1 according to a fourth embodiment of the invention. In general, the fourth embodiment is identical to the third embodiment but the first battery terminal 6 and the second battery terminal 7 are isolated from the housing 13 via isolating elements 15, as in the second embodiment. Therefore, a further pin 16 is provided. The further pin 16 is electrically contacted to the second contact element 5 and hence to the second battery terminal 7. The further pin 16 is also held by the second contact element 5, preferable in close proximity to the contact pin 12. The elastic element 17 is adapted to contact both, the contact pin 12 and the further pin 16 when being moved to the second position. The elastic portion 17 is electroconductive such that in the second position, the elastic portion 17 electrically contacts the contact pin 12 and the further pin 16 and hence the energy storing foil 8 and the second battery terminal 7. This leads to activation of the discharging device 3 as described above.

The second embodiment might be combined with any other embodiment. In this case, the discharging device 3 will be activated in case either the temperature exceeds a predetermined critical temperature value or the pressure exceeds a predetermined critical pressure value.

The body 2 contains an electrolyte. The electrolyte preferably has a boiling point of at most the predetermined critical pressure value. In case the battery 1 overheats, the electrolyte will hence boil and increase the pressure inside the body 2. Therefore, the electrolyte helps to activate the discharging device in order to avoid critical battery behavior.

## Claims

1. Battery (1 comprising
• a body (2) including at least one battery cell (19),
• a discharging device (3) for selectively establishing a shortcut of the at least one battery cell (19),
• an activation device (12, 14, 16, 17) which is movable between a first position and a second position,
• wherein in the first position, the activation device (12, 14, 16, 17) does not influence the discharging device (3),
• wherein in the second position, the activation device (12, 14, 16, 17) activates the discharging device (3),
• wherein the activation device (12, 14, 16, 17) is adapted to be moved from the first positon to the second position by temperature and/or pressure increase within the body (2).

2. Battery (1) according to claim 1, **characterized in that** the discharging device (3) comprises
• a first contact element (4) electrically connected to a first battery terminal (6),
• a second contact element (5) electrically connected to a second battery terminal (7),
• an isolating foil (10) provided between the first contact element (4) and the second contact element (5) for electrical isolation, and
• an energy storing foil (8) provided between the first contact element (4) or the second contact element (5) and the isolating foil (10),
• wherein the activation device (12, 14, 16, 17) is adapted to electrically connect the first contact element (4) or the second contact element (5) and the energy storing foil (8) when moved to the second positon.

3. Battery (1) according to claim 2, **characterized in that** the energy storing foil (8) is adapted to heat up after the discharging device (3) is activated, thereby destroying the isolating foil (10) and/or liquefying solder layers (9) to electrically connect the first contact element (4) and the second contact element (5).

4. Battery (1) according to claim 2 or 3, **characterized in that** the activation device (12, 14, 16, 17) comprises a temperature-sensitive switch (14), particularly a bimetal,
• wherein the temperature-sensitive switch (14) electrically connects the first contact element (4) or the second contact element (5) and the energy storing foil (8) in the second positon,
• wherein the temperature-sensitive switch (14) disconnects the first contact element (4) or the second contact element (5) and the energy storing foil (8) in the first positon, and
• wherein the temperature-sensitive switch (14) is moved to the second position with the temperature inside the body (2) exceeding a predetermined temperature value.

5. Battery (1) according to any one of claims 2 to 4, **characterized in that** the activation device (12, 14, 16, 17) comprises a contact pin (12) electrically connected to either the first contact element (4) or the second contact element (5) and moveable between the first positon and the second position by an elastic portion (17) of the body (2), wherein the contact pin (12) electrically connects the first contact element (4) or the second contact element (5) and the energy storing foil (8) in the second positon and disconnects the first contact element (4) or the second contact element (5) and the energy storing foil (8) in the first positon.

6. Battery (1) according to claim 5, **characterized in that** the contact pin (12) is electrically connected to and held by the elastic portion (17), wherein the elastic portion (17) is further electrically connected to either the first contact element (4) or the second contact element (5), and wherein the contact pin (12) is moved to the second position by deformation of the elastic portion (17).

7. Battery (1) according to any one of claims 2 to 4, **characterized in that** the activation device (12, 14, 16, 17) comprises a contact pin (12) electrically connected to and held by the energy storing foil (8) and an elastic portion (17) of the body (2), wherein the elastic portion (17) is deformable between the first position and the second position, and wherein the elastic portion (17) electrically connects the first contact element (4) or the second contact element (5) and the contact pin (12) in the second positon and disconnects the first contact element (4) or the second contact element (5) and the contact pin (12) in the first positon.

8. Battery (1) according to claim 7, **characterized in that** the activation device (12, 14, 16, 17) comprises a further pin (16) electrically connected to and held by the first contact element (4) or the second contact element (5), wherein the elastic portion (17) electrically connects the further pin (16) and the contact pin (12) in the second positon and disconnects the further pin (16) and the energy storing foil (8) in the first positon.

9. Battery (1) according to any of claims 5 to 8, **characterized in that** the elastic portion (17) is deformable by pressure increase inside the body (2), wherein the contact pin (17) is moved to and/or the elastic portion is deformed to the second position with the pressure inside the body (2) exceeding a predetermined pressure value.

10. Battery (1) according to claim 9, **characterized in that** the body (2) comprises an electrolyte having a boiling point of at most the predetermined pressure value.
